# EUROPÄISCHE PATENTANMELDUNG

(11) **EP 2 444 189 A1**
(43) Veröffentlichungstag der Anmeldung: **25.04.2012**
(21) Anmeldenummer: 10188751.1
(22) Anmeldetag: 25.10.2010
(51) Int. Cl.: B23K 7/00, B23K 7/10, B23K 10/00, B23K 37/04, B08B 15/00, B23Q 1/01

(54) **Schneidtisch für eine Brennschneidanlage mit freiem Raum unter der Auflagefläche**

(71) Anmelder: Kemper, Gerd, 48691 Vreden (DE)
(72) Erfinder: Kemper, Gerd, 48691 Vreden (DE)
(74) Vertreter: Habbel, Ludwig

(57) **Zusammenfassung**

Bei einem Schneidtisch (1) für eine Brennschneidanlage, mit zwei seitlichen Konsolen (2), und einer zwischen den Konsolen (2) vorgesehenen Auflagefläche (3) für das zu schneidende Material, wobei in wenigstens einer Konsole (2) ein an ein Abluftgebläse anschließbarer Absaugkanal (4) vorgesehen ist, der Absaugkanal (4) mittels mehrerer, separat voneinander zu öffnender und zu schließender Luftklappen abschnittsweise in Strömungsverbindung mit dem Bereich unterhalb der Auflagefläche (3) bringbar ist, und die Luftklappen mit Hilfe von Antriebsorganen verstellbar sind, schlägt die Erfindung vor, dass der Schneidtisch (1) unterhalb der Auflagefläche (3) und zwischen den Konsolen (2) bis zum Boden frei von beweglichen Bauteilen ist, und die Antriebsorgane außerhalb des Absaugkanals (4) sowie außerhalb des sich von der Auflagefläche (3) bis zum Absaugkanal (4) ergebenden Luftströmungsweges angeordnet sind.

## Beschreibung

Die Erfindung betrifft einen Schneidtisch nach dem Oberbegriff des Anspruchs 1.

Gattungsgemäße Schneidtische werden auch als Brennschneidtische bezeichnet. Auf ihnen werden Materialstücke, beispielsweise Bleche mit Materialstärken von 80 bis mehr als 250 mm mit Hilfe eines Autogen- oder Plasma- Brenners durchtrennt. Die Werkstücke liegen dabei auf mehreren vertikal verlaufenden und im Abstand zueinander angeordneten Auflageblechen bzw. Stegen. Diese Auflagebleche ruhen auf zwei seitlichen, parallel zueinander verlaufenden Konsolen, welche die Länge des Schneidtisches, sowie durch ihren Abstand zueinander auch dessen Breite definieren, wobei der Bereich zwischen den Konsolen als Arbeitsfläche des Schneidtisches bezeichnet ist.

In den Konsolen sind Luftkanäle vorgesehen, die an ein Abluftgebläse angeschlossen sind, so dass Rauchgase, die beim Trennen des Werkstückes entstehen, abgesaugt und beispielsweise gefiltert werden können. Um die erforderliche zu installierende Absaugleistung möglichst gering zu halten, bzw. um mit der installierten Absaugleistung eine möglichst effektive Luftabsaugung der Rauchgase zu ermöglichen, ist es bei gattungsgemäßen Schneidtischen eine sektionale Besaugung des Tisches üblich, indem der Absaugkanal sektional, also abschnittsweise, geöffnet oder verschlossen wird. Hierfür sind entsprechende Luftklappen vorgesehen, so dass stets nur in dem Bereich, in dem auch tatsächlich das Werkstück geschnitten wird, eine Besaugung des Schneidtisches erfolgt. Für die Betätigung der Luftklappen sind Antriebsorgane vorgesehen, um beispielsweise mittels Umlenkhebeln und dergleichen die Klappen zwischen einer Schließstellung und einer Offenstellung bewegen zu können. Die einzelnen Sektionen sind üblicherweise durch Trennbleche voneinander abgetrennt, so dass die Saugwirkung auf die jeweils "aktive" Sektion konzentriert wird, deren eine oder mehrere Luftklappen geöffnet sind.

Mit zunehmender Schneidleistung leidet die Mechanik eines Schneidtisches ganz erheblich, weil beispielsweise bei Schneidströmen von deutlich mehr als 400 Ampere und Blechdicken von mehr als 250 mm erhebliche Mengen an Funken und glühenden Metalltropfen erzeugt werden und auch die angesaugte Abluft hohe Temperaturen von mehr als 100° C aufweist.

Der Erfindung liegt die Aufgabe zu Grunde, einen gattungsgemäßen Schneidtisch dahingehend zu verbessern, dass dieser für hohe Schneidleistungen geeignet ist und eine dementsprechend robuste Mechanik für die Betätigung der Luftklappen aufweist.

Diese Aufgabe wird durch einen Schneidtisch mit den Merkmalen des Anspruchs 1 gelöst.

Die Erfindung schlägt mit anderen Worten vor, die Antriebsorgane für die Luftklappen sowohl vor dem Funkenregen zu schützen, der sich aus dem Schneidvorgang ergibt, und die Antriebsorgane auch vor dem heißen Abluftstrom zu schützen, so dass die Antriebsorgane sowohl hinsichtlich der Temperaturbelastung durch den Abluftstrom geschützt sind als auch hinsichtlich der Verschmutzungen oder der chemischen Angriffe, die aufgrund der im Abluftstrom transportierten Partikel ansonsten auftreten würden.

Zu diesem Zweck ist vorgesehen, dass der Schneidtisch unterhalb der Auflagefläche und zwischen den Konsolen bis zum Boden frei von beweglichen Bauteilen ist. Beispielsweise sind dort keine Pneumatik- oder Hydraulikzylinder, elektrische Antriebsmotoren oder dergleichen angeordnet, die ansonsten für die Betätigung der Luftklappen dort vorgesehen sein könnten. Zudem sind die Antriebsorgane auch nicht, wie dies ansonsten bei aus der Praxis bekannten Schneidtischen der Fall ist, im Absaugkanal selbst angeordnet. Vielmehr schlägt die Erfindung vor, die Antriebsorgane außerhalb des Absaugkanals anzuordnen und zwar dort, wo sie sich außerhalb des Luftströmungsweges befinden, der sich von der Auflagefläche bis zum Absaugkanal ergibt.

Vorteilhaft kann außerhalb des Absaugkanals ein eigener Technikkanal vorgesehen sein, so dass ein nahezu geschlossener Hohlraum geschaffen wird, der entlang einer Konsole verläuft und in welchem die entsprechenden Antriebsorgane angeordnet sind. Dabei ist vorgesehen, innerhalb dieses Technikkanals solche Antriebsorgane anzuordnen, die als Stelleinrichtungen ausgestaltet sind, beispielsweise als hydraulisch oder pneumatisch betätigte Stellzylinder, als Elektromotoren oder dergleichen. Das Innere dieses Technikkanals ist mittels eines von außen zu öffnenden Deckels zugänglich, so dass einerseits die Stelleinrichtungen grundsätzlich vor äußeren Einflüssen geschützt sind, andererseits im Bedarfsfall für Wartungen oder Reparaturen problemlos zugänglich sind.

Der Technikkanal kann vorteilhaft oberhalb des Absaugkanals angeordnet sein, so dass auf diese Weise eine problemlose Erreichbarkeit und Zugänglichkeit zu den Antriebsorganen gewährleistet ist und eventuelle Wartungs- oder Reparaturarbeiten entsprechend schnell und preisgünstig durchgeführt werden können.

Vorteilhaft kann vorgesehen sein, dass von den erwähnten Antriebsorganen, die als Stelleinrichtungen in dem Technikkanal angeordnet sind, weitere Antriebsorgane bis zu den Luftklappen verlaufen, wobei diese Antriebsorgane als Übertragungselemente ausgestaltet sind, beispielsweise als Verbindungsgestänge, Umlenkhebel oder dergleichen. Diese Übertragungselemente erstrecken sich durch die Wand des Technikkanals, um eine die Bewegung der Luftklappen ermöglichende Antriebsverbindung von den Stelleinrichtungen bis zur Luftklappe zu schaffen.

Die Luftklappen können vorzugsweise um eine liegende Achse schwenkbar ausgestaltet sein, wobei sich diese liegende Achse im oberen Bereich der Luftklappen befindet. Eine solche Luftklappe kann aus einer hängenden, also abwärts gerichteten Schließstellung, in welcher sie den Absaugkanal verschließt, um die Schwenkachse nach oben geschwenkt und in einer angehobene Offenstellung gebracht werden, in welcher sie die Absaugöffnung im Absaugkanal frei gibt.

Dabei kann vorteilhaft vorgesehen sein, dass die Luftklappe in ihrer angehobenen Offenstellung als Luftleitblech dient, welches den sich durch die Absaugung ergebenden Abluftstrom von den Antriebsorganen dieser Luftklappe trennt. In den Abschnitten des Schneidtisches, wo momentan nicht geschnitten wird und die Luftklappen geschlossen sind, befinden sich ohnehin keine partikelhaltigen Gase, so dass die quasi ungeschützt freiliegenden, als Übertragungselemente ausgestalteten Antriebsorgane ohnehin keiner großen Belastung durch heiße und partikelbelastete Abluft ausgesetzt sind. In dem momentan "aktiven" Abschnitt hingegen, wo eine derartige Abluftströmung besteht, schützt die angehobene Luftklappe die ihr zugeordneten Antriebsorgane automatisch durch ihre Funktion als Luftleitblech.

In praxisüblicher Art und Weise kann vorgesehen sein, die beiden Konsolen auf einen vorhandenen Hallenboden aufzustellen. In einer ersten Ausgestaltung des vorschlagsgemäßen Schneidtisches kann vorgesehen sein, dass der Hallenboden zwischen den Konsolen auch den Boden des Schneidtisches bildet. Die Trennbleche des Schneidtisches sind dabei möglichst einfach demontierbar an den Konsolen gehalten, so dass nach Entfernung der Trennbleche und der Auflagebleche zwischen den beiden Konsolen ein Freiraum geschaffen ist. Material, welches sich auf dem Boden des Schneidtisches, also auf dem Hallenboden zwischen den beiden Konsolen befindet, kann nun problemlos entfernt werden, beispielsweise mit Hilfe eines Räumschildes, das an ein Flurförderfahrzeug angebaut ist.

Alternativ zu dieser ersten Ausgestaltung eines vorschlagsgemäßen Schneidtisches kann vorgesehen sein, als Boden des Schneidtisches eine eigene Einrichtung zu verwenden, die zudem einen automatischen bzw. maschinellen Materialaustrag ermöglicht. In diesem Fall wird der Boden zwischen den beiden Konsolen durch eine Fördereinrichtung gebildet, die wahlweise ein- oder ausgeschaltet werden kann, Schlacken und Kleinteile, die sich am Boden gesammelt haben, können dementsprechend bei eingeschalteter Fördereinrichtung aus dem Schneidtisch herausgefördert werden, ohne dass eine Demontage der Trennbleche und der Auflagebleche erforderlich wäre.

Anstelle von Förderbändern, Gliederketten oder ähnlich beweglicher Elemente kann in vorteilhafter Weise eine besonders robuste Ausgestaltung der Fördereinrichtung eines solchen Bodens vorgesehen sein, indem die Fördereinrichtung als Schwingförderer ausgestaltet ist, so dass allein durch die Schwingungsbewegungen der Bodenfläche das auf dem Boden aufliegende Material gefördert wird.

Dabei kann insbesondere vorteilhaft vorgesehen sein, nicht nur einen Schwingförderer anzuordnen, sondern wenigstens zwei nebeneinander angeordnete Schwingförderer vorzusehen. Angesichts der in der Praxis erforderlichen Bereitstellung von Schneidtischen in unterschiedlichen Breiten kann somit die gewünschte Bodenbreite durch die entsprechende Verwendung von einem, zwei oder mehreren Schwingförderern nebeneinander verwirklicht werden, so dass durch diese modulartige Ausgestaltung des Bodens eine möglichst wirtschaftliche Herstellung unterschiedlich breiter Schneidtisch-Böden möglich ist.

Ein Ausführungsbeispiel der Erfindung wird anhand der rein schematischen Darstellungen nachfolgend näher erläutert. Dabei zeigt
- Fig. 1: einen Vertikalschnitt quer durch einen Schneidtisch, und die
- Fig. 2 und 3: die Details II und III von Fig. 1 in einem gegenüber Fig. 1 größerem Maßstab.

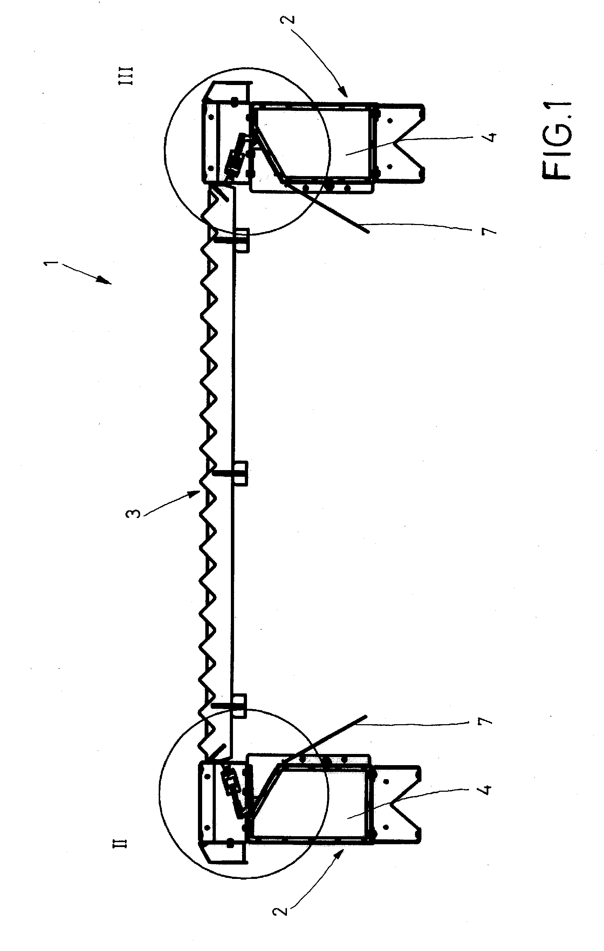

In Figur 1 ist mit 1 insgesamt ein Schneidtisch bezeichnet, der zwei seitliche Konsolen 2 aufweist und dazwischen eine durch mehrere Auflagebleche 3 gebildete Auflagefläche für das zu schneidende Material.

In den Konsolen ist jeweils ein Absaugkanal 4 vorgesehen, der über die Länge der Konsole gesehen mit einer Mehrzahl von Absaugöffnungen 5 versehen ist, wobei jede dieser Absaugöffnungen 5 durch eine Luftklappe 6 verschlossen werden kann.

Weiterhin ist an den Konsolen 2 jeweils ein Materialabweiser 7 in Form eines schräggestellten Bleches vorgesehen, so dass Funken und Kleinteile, die zwischen den Konsolen 2 niedergehen, durch den Materialabweiser 7 zur Mitte des Bodens geleitet werden, der sich unterhalb der Auflagebleche 3 befindet. Für die spätere Säuberung des Schneidtisches 1, wenn derartige Materialien zwischen den Konsolen 2 entfernt werden sollen, ist es vorteilhaft, dass durch die Wirkung der Materialabweiser 7 diese aus dem Schneidtisch 1 zu entfernenden Partikel jeweils in einem Abstand von den Konsolen 2 liegen und nicht bis an die Konsolen 2 heranreichen.

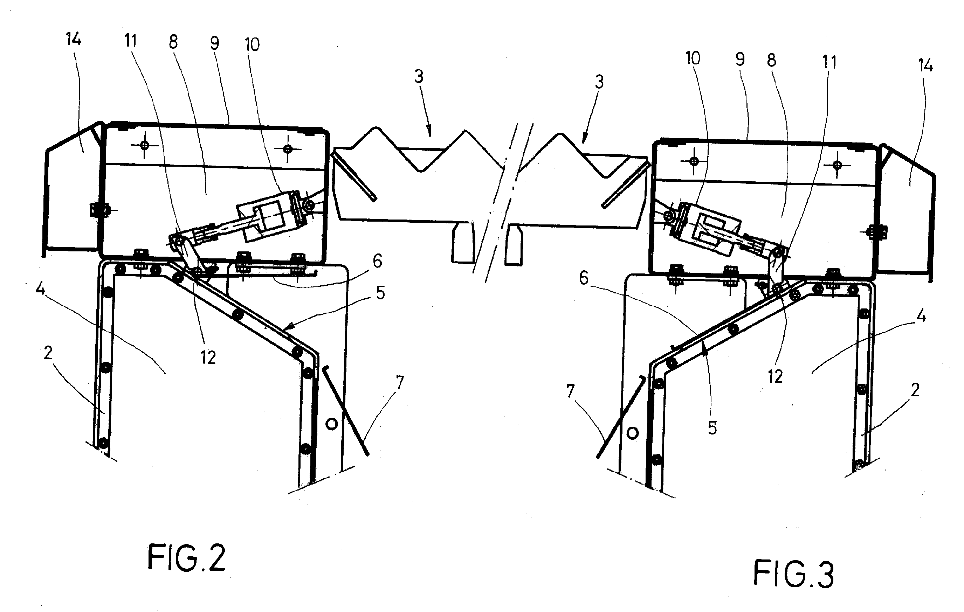

Oberhalb der Absaugkanäle 4 sind Technikkanäle 8 vorgesehen, die jeweils durch einen abnehmbaren oberen Deckel 9 verschlossen sind. Innerhalb des Technikkanals 8 sind jeweils mehrere Pneumatikzylinder als Stelleinrichtungen 10 angeordnet, wobei die Stelleinrichtung 10 in Fig. 2 in ihrem ausgefahrenen und in Fig. 3 in ihrem eingefahrenen Zustand dargestellt ist, entsprechend der in Fig. 2 dargestellten Offenstellung und in Fig. 3 dargestellten Schließstellung der Luftklappe 6.

An die Stelleinrichtungen 10 schließen Übertragungselemente 11 an, die in Form von Gelenkhebeln ausgestaltet sind und zur jeweiligen Luftklappe 6 verlaufen, wobei die Luftklappen 6 jeweils um eine liegende Schwenkachse 12 schwenkbar gelagert sind.

Die Stelleinrichtungen 10 und Übertragungselemente 11 stellen Antriebsorgane zur Betätigung der Luftklappen 6 dar, wobei diese Antriebsorgane pneumatisch betätigt werden, insbesondere die Stelleinrichtungen 10. Daher ist außerhalb des jeweiligen Technikkanals 8 ein Kabelkanal 14 vorgesehen, in welchem elektronische Steuer- bzw. Signalleitungen, elektrische Stromversorgungsleitungen und Hydraulik- oder Pneumatikschläuche verlegt werden können, so dass diese gemeinsam als "Kabel" bezeichneten Elemente möglichst weit vom heißen Abluftstrom entfernt und vor dessen Einwirkungen optimal geschützt sind.

Die Materialabweiser 7 enden, wie aus Fig. 1 ersichtlich ist, oberhalb des Bodens, auf dem die Konsolen 2 aufstehen. Unterhalb dieser Materialabweiser 7 ist daher ausreichend Platz vorhanden, um statt des Hallenbodens, auf dem die Konsolen 2 aufstehen, einen eigenen Boden des Schneidtisches 1 zu installieren, beispielsweise in Form einer Fördereinrichtung, die mit Hilfe von einem oder mehreren Schwingförderern einen automatisierten und jedenfalls mechanisierten Materialaustrag aus dem Schneidtisch 1 ermöglicht.

Die Darstellungen der Fig. 1 bis 3 zeigen den Schneidtisch 1 nicht in seiner funktionsfähigen Ausgestaltung, sondern zeigen zur Erläuterung der Erfindung wesentliche Elemente des

Schneidtisches 1. Beispielsweise sind Trennbleche nicht dargestellt, mit deren Hilfe der Schneidtisch 1 über seine Länge gesehen in mehrere Abschnitte unterteilt ist, die jeweils durch eigene Luftklappen 6 einzeln besaugt werden können.

## Patentansprüche

1. Schneidtisch einer Brennschneidanlage,
mit zwei seitlichen Konsolen,
und einer zwischen den Konsolen vorgesehenen Auflagefläche für das zu schneidende Material,
wobei in wenigstens einer Konsole ein an ein Abluftgebläse anschließbarer Absaugkanal vorgesehen ist,
der Absaugkanal mittels mehrerer, separat voneinander zu öffnender und zu schließender Luftklappen abschnittsweise in Strömungsverbindung mit dem Bereich unterhalb der Auflagefläche bringbar ist,
und die Luftklappen mit Hilfe von Antriebsorganen verstellbar sind,
**dadurch gekennzeichnet,**
**dass** der Schneidtisch (1) unterhalb der Auflagefläche (3) und zwischen den Konsolen (2) bis zum Boden frei von beweglichen Bauteilen ist,
und die Antriebsorgane außerhalb des Absaugkanals (4) sowie außerhalb des sich von der Auflagefläche (3) bis zum Absaugkanal (4) ergebenden Luftströmungsweges angeordnet sind.

2. Schneidtisch nach Anspruch 1,
**dadurch gekennzeichnet,**
**dass** außerhalb des Absaugkanals (4) ein Technikkanal (8) vorgesehen ist, der einen von außen zu öffnenden Deckel (9) aufweist,
wobei in dem Technikkanal (9) als Stelleinrichtungen (10) ausgestaltete Antriebsorgane der Luftklappen (6) angeordnet sind.

3. Schneidtisch nach Anspruch 2,
**dadurch gekennzeichnet,**
**dass** der Technikkanal (8) oberhalb des Absaugkanals (4) angeordnet ist.

4. Schneidtisch nach Anspruch 2 oder 3,
**dadurch gekennzeichnet,**
**dass** von den Stelleinrichtungen (10) als Übertragungselemente (11) ausgestaltete Antriebsorgane zu den Luftklappen (6) verlaufen, wobei sich die Übertragungselemente (11) durch die Wand des Technikkanals (8) erstrecken.

5. Schneidtisch nach einem der vorhergehenden Ansprüche,
**gekennzeichnet durch**
eine Luftklappe (6), die aus einer abwärts gerichteten, den Absaugkanal (4) verschließenden Schließstellung in eine angehobene, eine Absaugöffnung (5) im Absaugkanal (4) freigebende Offenstellung schwenkbar ist.

6. Schneidtisch nach Anspruch 5,
**dadurch gekennzeichnet,**
**dass** die Luftklappe (6) in ihrer Offenstellung als Luftleitblech vor den Antriebsorganen angeordnet ist, derart, dass das Luftleitblech die Antriebsorgane von dem sich von der Auflagefläche (3) bis zum Absaugkanal (4) ergebenden Luftstrom trennt.

7. Schneidtisch nach einem der vorhergehenden Ansprüche,
**dadurch gekennzeichnet,**
**dass** der Boden zwischen den beiden Konsolen (2) durch eine Fördereinrichtung gebildet ist, welche wahlweise ein-oder ausschaltbar ist, derart, dass auf den Boden gefallene Schlacken und Kleinteile bei eingeschalteter Fördereinrichtung aus dem Schneidtisch (1) herausgefördert werden.

8. Schneidtisch nach Anspruch 7,
**dadurch gekennzeichnet,**
**dass** die Fördereinrichtung einen Schwingförderer aufweist.

9. Schneidtisch nach Anspruch 8,
**dadurch gekennzeichnet,**
**dass** die Fördereinrichtung wenigstens zwei Schwingförderer aufweist, die nebeneinander in Längsrichtung des Schneidtisches (1) verlaufend angeordnet sind.
